# EUROPEAN PATENT APPLICATION

(11) **EP 2 081 246 A2**
(43) Date of publication of application: **22.07.2009**
(21) Application number: 08169524.9
(22) Date of filing: 20.11.2008
(51) Int. Cl.: H01M 8/06, H01M 8/04

(54) **Fuel cell and control method thereof**

(30) Priority: 18.01.2008 KR 20080005560
(71) Applicant: Samsung Electronics Co., Ltd., Suwon-si, Gyeonggi-do 442-743 (KR)
(72) Inventor: Heo, Jin S., Gyeonggi-do (KR); Lee, Hyun Chul, Gisan-dong, Hwasung-si Gyeonggi-do (KR)
(74) Representative: Grünecker, Kinkeldey, Stockmair & Schwanhäusser Anwaltssozietät

(57) **Abstract**

Disclosed herein are a fuel cell and a method for controlling the fuel cell. The fuel cell includes a reforming apparatus to perform reformation reactions and thereby to produce a fuel gas and a heat by-product, a stack to receive the fuel gas from the reforming apparatus and thereby to generate energy, a preheating unit to heat the stack and thereby to promote the operation of the stack, and an operation control unit to supply at least one of the fuel gas and heat by-product to the preheating unit during an initial operation of the reforming apparatus, and to supply the fuel gas to the stack upon the completion of the initial operation of the reforming apparatus. According to the fuel cell, it is possible to rapidly elevate an internal temperature of the fuel cell in an economical manner until the fuel cell initially operation and then enables normal operation.

## Description

### BACKGROUND

### 1. Field

The present invention relates to a fuel cell and a method for controlling the fuel cell. More specifically, the present invention relates to a fuel cell and a method for controlling the fuel cell wherein an internal temperature can be rapidly elevated to a level required for normal operation of the fuel cell.

### 2. Description of the Related Art

Generally, fuel cells generate electric and thermal energies via chemical reactions of oxidation/reduction. The limitation on deposits of fossil fuels e.g. petroleum and coal has actually brought about the exhaustion of energy sources. Processes using the fossil fuels cause discharge of a variety of contaminants, creating the problem of environmental pollution. On the other hand, fuel cells are currently receiving a great deal of attention as alternative energy sources in that they generate electric and thermal energies through chemical reactions and have the potentialities of efficiently solving the problems, i.e., energy exhaustion and environmental pollution.

Fuel cells include a fuel cell supplier, a reforming apparatus, a stack and a cooling water supplier, which are disclosed in Korean Patent Application Nos. 1998-0016383 and 2003-0047158.

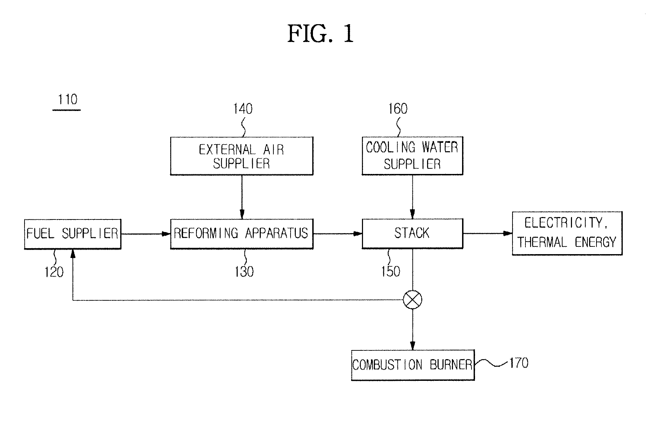

Hereinafter, referring to FIG. 1, an operation mechanism of a fuel cell according to a conventional embodiment will be illustrated in detail.

A fuel cell 110 includes a fuel supplier 120 to supply a hydrocarbon (CH)-based fuel e.g. liquefied natural gas (LNG), liquefied petroleum gas (LPG), kerosene, etc, to a reforming apparatus 130.

The fuel supplied to the reforming apparatus 130 undergoes a series of processes, i.e. desulfurization, reformation and removal of carbon monoxide (CO). After the processes, the resulting fuel is transformed into a gas containing a small amount of carbon monoxide and a major amount of hydrogen and is then combined with external air supplied from external air supplier 140 to produce a fuel gas. Then, the fuel gas is supplied to a stack 150.

The stack 150 includes a laminate of a plurality of single cells in which electrochemical reactions occur. Each of the single cells includes a membrane-electrode assembly (MEA) in which an electrolyte film is interposed between a fuel electrode and an air electrode. On the fuel electrode, hydrogen is decomposed into protons (hydrogen ions, H+) and electrons to generate electricity. On the air electrode, the protons and electrons are combined with oxygen to produce water.

A cooling water supplier 160 circulates cooling water with a cooling plate interposed between a plurality of unit cells, to discharge heat generated via the electrochemical reactions to the outside of the stack 150.

Chemical reactions do not begin to occur by a predetermined period of time after the fuel cell 110 initially operates. Accordingly, the temperature of the constituent components of the fuel cell 110 is below the level required for normal operation for a considerably long time. The constituent components differ in minimum temperature required for normal operation of the fuel cell 110. In some cases, although constituent components that require a low temperature normally operate, constituent components that require a high temperature fail to normally operate.

For example, a reformer (not shown) included in a reforming apparatus 130 reaches a required operation temperature and thus produce a gas, while a shift reactor (not shown) included in the reforming apparatus fails to reach a required operation temperature and to normally operate, thus incapable of efficiently removing carbon monoxide.

In this case, after passing through the shift reactor (not shown), the fuel gas approximately contains 75% of hydrogen and 5% of carbon monoxide. When the fuel gas containing 5% of carbon monoxide is supplied to the stack 150, the stack 150 may be damaged. For this reason, although containing 70% of useful hydrogen, the fuel gas may be not suitable for use in the generation of electricity. Accordingly, the fuel gas is transferred to a combustion burner 170 or a fuel supplier 120 and then exhausted by combustion until the temperature reaches a predetermined level and a gas containing carbon monoxide in an amount below 0.5% is produced.

Accordingly, conventional fuel cells combust and exhaust carbon monoxide generated until each constituent component is heated to a temperature required for normal operation, after the fuel cell initially operates, thus suffering from problems in that economic efficiency is very low and it takes for a considerably long time to heat the constituent component to a temperature required for normal operation.

In order to solve these problems, a method for heating constituent components to a temperature required for normal operation using an electric heater has been suggested. However, this method requires a considerably long time of heating. which uneconomically involves large electric energy consumption.

### SUMMARY

In an aspect of the present invention, there is provided a method to rapidly elevate the temperature of a fuel cell in an economical manner until the fuel cell initially operation and then enables normal operation.

In accordance with an aspect of the invention, there is provided a fuel cell including a reforming apparatus to perform reformation reactions, which produces a fuel gas and a heat by-product; a stack to receive the fuel gas from the reforming apparatus and to generate energy; a preheating unit to heat the stack; and an operation control unit to supply at least one of the fuel gas and heat by-product to the preheating unit during an initial operation of the reforming apparatus, and to supply the fuel gas to the stack upon the completion of the initial operation.

The reforming apparatus may include a heating burner, a reformer which is heated by the heating burner, a shift reactor which receives gas discharged by the reformer, a mixer to mix gas received from the shift reactor with external air, and a carbon monoxide remover which removes carbon monoxide from mixture of gas and external air to provide the fuel gas, wherein the stack includes: a plurality of cells wherein each cell has a fuel electrode to receive the fuel gas through a first passage extended from the carbon monoxide remover and an air electrode in which the fuel electrode and air electrode are positioned at opposite sides of an electrolyte film; a plurality of cooling plates to receive circulation water from a circulation water reservoir, wherein each cooling plate is interposed between adjacent cells; and end plates provided at an outermost edge of the stack, and wherein the stack generates energy comprising electricity.

The operation control unit may include a controller to control the mixer and thereby to determine a supply passage of the fuel gas, and the preheating unit may be at least one o a circulation water reservoir and a combustion reactor used to heat the stack during the initial operation.

The combustion reactor may include a catalyst acceptor containing a catalyst to react with the fuel gas and to generate heat and the combustion reactor may communicate with a second passage extended from the mixer.

The combustion reactor may take the shape of a pocket, encompassing the outside of at least one of the circulation water reservoir or at least one end plate.

The combustion reactor may take the shape of a tube wound along the external surface of at least one of the circulation water reservoir or at least one end plate.

The combustion reactor may take the shape of a tube arranged in the inside of at least one of the circulation water reservoir or at least one end plate.

The combustion reactor may further comprise a third passage through which the fuel gas passed through the combustion reactor passes through one of the fuel electrode and the air electrode, while being heat-exchanged.

The fuel cell may further include a heat exchanger, wherein the heat by-product may be warm water passed through the heat exchanger, wherein the water may be warmed by at least one of gas discharged by the heating burner and gas discharged from the reformer, and wherein the circulation water reservoir may be provided with a fourth passage through which the warm water is supplied.

The heat by-product may be warm water passed through the heat exchanger and the circulation water reservoir may be provided with a fourth passage through which the warm water is supplied.

The second passage may include a fifth passage branched toward the combustion reactor from a control valve arranged on the second passage, and a sixth passage branched toward the heating burner from the control valve.

The catalyst may be one of platinum (Pt), palladium (Pd), ruthenium (Ru), gold (Ag) and oxide thereof.

The initial operation may include a first operation in which the temperature of the shift reactor is lower than 100°C and a second operation in which the temperature of the stack is lower than 120°C.

During the first operation, the warm water, as the heat by-product generated at the reforming apparatus, may be supplied to the preheating unit, and during the second operation, the gas generated at the reforming apparatus may be supplied to the preheating unit.

During the first operation, when the temperature of the reformer is higher than 500°C, the warm water as the thermal by-product may be supplied to the preheating unit.

The external air may have a composition in which a ratio X (v/v) of oxygen to the sum of hydrogen and carbon monoxide is in the range of 0.1 < X < 2.

In accordance with another aspect of the invention, there is provided a method for controlling a fuel cell, including a stack, the method including heating a shift reactor of a reforming apparatus to a preset shift reactor temperature using a heating burner; and supplying, to a combustion reactor, a fuel gas obtained by mixing external air with a gas generated at the shift reactor of the reforming apparatus, when the stack temperature is lower than a preset stack temperature.

The heating of the shift reactor to the preset shift reactor temperature may include heating a reformer to a preset reformer temperature.

The method may further include supplying water to a heat exchanger of the reformer when the reformer reaches the preset reformer temperature, and preheating the stack using the heat-exchanged water until the shift reactor reaches the preset shift reactor temperature.

The external air may have a composition in which a ratio X (v/v) of oxygen to the sum of hydrogen and carbon monoxide is in the range of 0.1 < X < 2.

The preset reformer temperature may be 500°C and the preset shift reactor temperature may be 100°C.

In accordance with another aspect of the invention, there is provided a method for controlling a fuel cell including a reforming apparatus and a stack including heating a shift reactor of the reforming apparatus to a preset shift reactor temperature using gas discharged from a reformer of the reforming apparatus; preheating fuel gas obtained by mixing external air with a gas generated at the shift reactor of the reforming apparatus, when the stack temperature is lower than a preset stack temperature; and performing normal operation to supply the fuel gas to the stack, when the stack temperature reaches the preset stack temperature.

The method may further include preheating the stack using warm water, which has been heat exchanged with a reformer of the reforming apparatus until the shift reactor reaches the preset shift reactor temperature.

The method may further include preheating the stack using warm water, which has been heat exchanged with a reformer of the reforming apparatus until the shift reactor reaches the preset shift reactor temperature.

In an aspect of the present invention, there is provided a fuel cell for generating electricity, the fuel cell includes a stack to receive fuel gas from a reforming apparatus and to generate electricity; a preheating unit to heat the stack; an operation control unit to supply at least one of the fuel gas and heat by-product from the reforming apparatus to the preheating unit when stack temperature is lower than a preset stack temperature, and to supply the fuel gas to the stack when the stack temperature reaches the preset stack temperature.

### BRIEF DESCRIPTION OF THE DRAWINGS

These and/or other aspects, features, and advantages will become apparent and more readily appreciated from the following description of exemplary embodiments, taken in conjunction with the accompanying drawings of which:
FIG. 1 is a view illustrating an operation mechanism of a fuel cell according to a conventional embodiment;
FIG. 2 is a view illustrating an operation mechanism of a fuel cell according to a first exemplary embodiment of the present invention;
FIG. 3a is a perspective view illustrating the combustion reactor in FIG. 2;
FIG. 3b is a cross-sectional view illustrating the combustion reactor in FIG. 2;
FIG. 4 is a flow chart illustrating a method for controlling the fuel cell according to the first exemplary embodiment of the present invention;
FIG. 5 is a partial cross-sectional view illustrating the combustion reactor according to a second exemplary embodiment of the present invention;
FIG. 6 is a partial cross-sectional view illustrating the combustion reactor according to a third exemplary embodiment of the present invention;
FIG. 7 is a partial cross-sectional view illustrating the combustion reactor according to a fourth exemplary embodiment of the present invention;
FIG. 8a is a perspective view of the combustion reactor of FIG. 7;
FIG. 8b is a sectional view taken along the lines "A-A" of FIG. 7;
FIG. 9 is a partial cross-sectional view illustrating the combustion reactor according to a fifth exemplary embodiment of the present invention; and
FIG. 10 is a partial cross-sectional view illustrating the combustion reactor according to a sixth exemplary embodiment of the present invention.

### DETAILED DESCRIPTION OF EMBODIMENTS

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

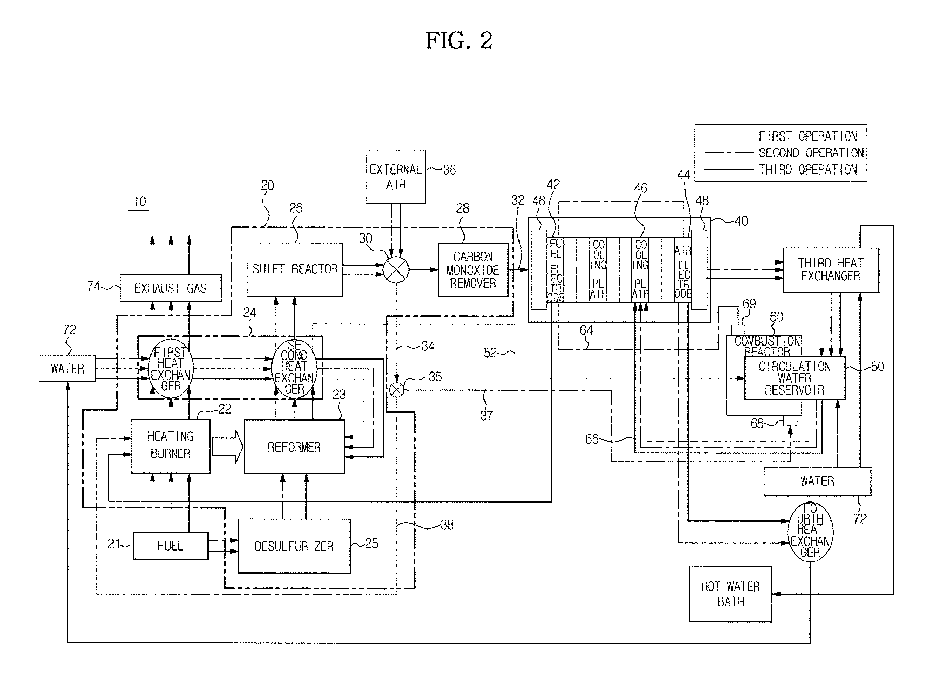

FIG. 2 is a schematic diagram illustrating an operation mechanism of a fuel cell according to a first exemplary embodiment of the present invention.

As shown in FIG. 2, in accordance with the first exemplary embodiment of the present invention, a fuel cell 10 includes a reforming apparatus 20 to perform reformation, a stack 40 to generate electricity, a circulation water reservoir 50 containing circulation water and a combustion reactor 60 to directly heat the circulation water.

The reforming apparatus 20 performs reformation reactions to transform a hydrocarbon-based fuel 21 into a gas containing hydrogen as a major ingredient. The reforming apparatus 20 includes a heating burner 22, a reformer 23, a shift reactor 26, a mixer 30 and a carbon monoxide remover 28.

The heating burner 22 burns the hydrocarbon-base fuel 21 e.g. liquefied natural gas (LNG), liquefied petroleum gas (LPG), kerosene, etc., to generate heat. The resulting heat is supplied to the reformer 23 to promote the reformation by heat.

The reformer 23 is heated by the heating burner 22 and practically performs the reformation. When the fuel cell 10 initially operates, the fuel 21 is supplied to the heating burner 22. The heating burner 22 is ignited to heat the reformer 23. The first operation (represented by a dotted line) of the fuel cell 10 is performed until a temperature of the reformer 23 reaches 500°C. When the temperature exceeds 500°C, water 72 begins to be supplied to a heat exchanger 24 in order to prevent the reformer 23 from being overheated. While passing through the heat exchanger 24, the water 72 is heat-exchanged with an exhaust gas 74 and the reformer 23 and is thus increased in temperature. After passing though the heat exchanger 24, the heated water 72 is supplied to the circulation water reservoir 50 via a fourth passage 52. Meanwhile, when the shift reactor 26 is overheated to a temperature exceeding 500°C, the fuel cell 10 performs a second operation (represented by dashed-dotted line). More specifically, the heating burner 22 continues the operation, and at the same time, the fuel passes through a desulfurizer 25, is purified to a level such that it contains sulfur in an amount below 10 ppb (parts per billion, a thousandth of 1 ppm) and is then supplied to the reformer 23. When the reformer 23 receives the fuel at an internal temperature exceeding 500°C, it operates reformation to produce a gas containing about 75% of hydrogen. Then, the produced gas is supplied to the shift reactor 26.

The shift reactor 26 receives the gas containing hydrogen as a major ingredient and then decreases the content of carbon monoxide in the gas. The gas supplied from the reformer 23 contains 75% of hydrogen, 15% of carbon dioxide and 5% of carbon monoxide. The reaction occurred in the shift reactor 26 is depicted by the Reaction Scheme below:

CO + H₂O ↔ CO₂ + H₂

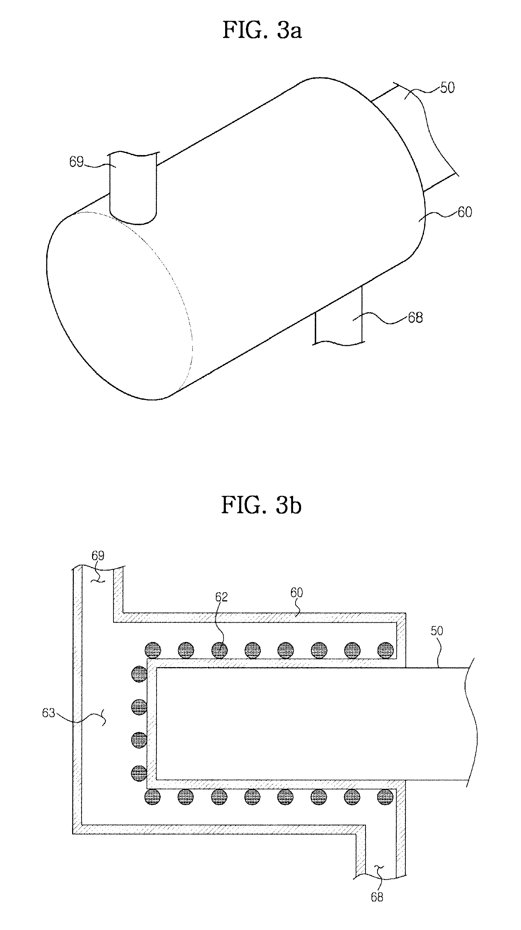

More specifically, when the requirements (e.g., temperature) of the shift reactor 26 are within a normal operation range, the forward reaction in the Reaction Scheme is activated to decrease the content of carbon monoxide to about 0.5 %. For normal operation of the fuel cell, the shift reactor 26 must be heated to 100°C or higher by the gas discharged from the reformer 23. That is, when the shift reactor 26 normally operates, it discharges a fuel gas containing carbon monoxide whose content is decreased within the acceptable range. In the state, i.e., a third operation (represented by a full line), where the temperature of the stack 40 is within the normal operation range, the mixer 30 mixes the gas with external air 36 and then supplies the mixed gas to the stack 40 through the carbon monoxide remover 28. However, unless the shift reactor 26 reaches a temperature of 100°C, it cannot normally operate and thus discharges a gas containing carbon monoxide in an amount exceeding the acceptable range. Accordingly, before the shift reactor 26 reaches the normal operation temperature, the fuel gas is not supplied to the reformer 23. When the shift reactor 26 reaches the normal operation temperature, the fuel gas is supplied to the reformer 23. Meanwhile, although the shift reactor 26 receives the fuel gas and then discharges a gas containing the acceptable amount of carbon monoxide, unless the stack 40 satisfy the requirement, i.e., a normal operation temperature, for the third operation (full line), the fuel cell 10 performs a second operation wherein the fuel gas is not supplied to the stack 40, but used to increase the temperature of the stack 40. That is, the carbon monoxide-containing gas is mixed with the external air 36 in the mixer 30, but flows through the second passage 34, not through the stack 40. The second passage 34 is branched at a control valve 35 and is divided into a fifth passage 37 and a sixth passage 38. The fifth passage 37 and the sixth passage 38 are connected to an inlet 68 of the combustion reactor 60 and the heating burner 22, respectively. The mixed fuel gas moved along the fifth passage 37 is used for exothermic reaction with catalysts (represented by the reference numeral "62" in FIGS. 3b) in the combustion reactor 60. The mixed gas moved along a sixth passage 38 is combusted in the heating burner 22 and is used as a heating source to heat the reformer 23. The gas undergoing reduction in carbon monoxide through the shift reactor 26 is supplied to the mixer 30.

The mixer 30 is an operation control unit, which mixes the fuel gas supplied from the shift reactor 26 with the external air 36 to produce a mixed gas. When the fuel cell 10 performs the first and second operations (dotted and dashed-dotted lines), the mixer 30 transfers the fuel gas generated at the shift reactor 26 to the second passage 34 according to a control signal of a controller (not shown), and when the fuel cell 10 performs the third operation (full line), the mixer 30 transfers the fuel gas to the carbon monoxide remover 28. In the mixer 30, the gas generated at the shift reactor 26 is mixed with the external air 36 in an appropriate ratio.

The composition of the external air 36 supplied to the mixer 30 is adjusted to a desired level wherein a ratio X (v/v) of oxygen to the sum of hydrogen and carbon monoxide is in the range of 0.1 < X < 2. About 0.1 of the ratio indicates that the amount of oxygen contained in the external air 36 is relatively low. On the other hand, about 2 of the ratio indicates that the amount of oxygen contained in the external air 36 is relatively high. Combustion and catalytic reaction velocities depend upon the amount of oxygen contained in the external air 36. That is, when the ratio is about 0.1, incomplete combustion occurs and respective parts of the fuel cell 10 thus decrease in temperature. Meanwhile, when the ratio is about 0.2, an oxygen supply amount is sufficient and respective parts of the fuel cell 10 thus increase in temperature. Accordingly, while taking into consideration the temperature and reaction velocity of respective parts of the fuel cell 10, the ratio of the external air is often adjusted within the range of 0.1 to 2 to control the combustion or catalytic reaction velocity.

The carbon monoxide remover 28 lowers the amount of carbon monoxide within the acceptable range through PROX (PReferential OXidation). A series of reactions occur in the carbon monoxide remover 28, as depicted by the Reaction Scheme below:

CO + 0.502 ↔ CO₂

H₂ + 0.5O₂ ↔ H_{2O}

More specifically, when the reaction in the carbon monoxide remover 28 proceeds forward, carbon monoxide is transformed into carbon dioxide and thus decreased in content. After the fuel gas passes through the carbon monoxide remover 28, carbon monoxide contained in the fuel gas is decreased below 10 ppm (parts per million). After passing through the carbon monoxide remover 28, the fuel gas is supplied to the stack 40 via a first passage 32.

The stack 40 receives the fuel gas from the carbon monoxide remover 28 and generates electric and thermal energies through electrochemical reactions. The stack 40 includes a laminate of a plurality of single cells in which electrochemical reactions occur. For convenience of illustration, FIG. 2 of the present invention conceptually shows the shape of a fuel electrode 42, an air electrode 44 and a plurality of cooling plates 46. Each of the unit cells (not shown) has a structure in which the fuel electrode 42 and the air electrode 44 are arranged at the opposite sides of an electrolyte film (not shown). The plurality of unit cells (not shown) are laminated and each of the cooling plates 46 is then interposed between the adjacent unit cells. Meanwhile, two end plates 48 are provided at the left and right sides of the stack 40, respectively.

On the fuel electrode 42 and the air electrode 44, oxidative and reductive reactions of hydrogen occur to generate electricity. That is, on the fuel electrode 42, hydrogen is cleaved into protons and electrons by catalysts to generate electricity. On the air electrode 44, the protons derived from the fuel electrode 42 are combined with oxygen to produce water.

The cooling plates 46 act as a passage, allowing circulation water to circulate inside the stack 40. While flowing through the cooling plates 46 via a circulation passage 66, the circulation water absorbs heat generated at the stack 40 or supplies the heat to the stack 40 to maintain the constant temperature of the stack. When the fuel cell 10 firstly operates and the stack 40 thus has a low temperature, it performs the first and second operations (dotted and dashed-dotted line), wherein the heated circulation water is supplied from the circulation water reservoir 50 to the cooling plate 46 and thus leads to an increase in the temperature of the stack 40. On the other hand, when the fuel cell 10 normally operates and thus generates a large amount of heat via oxidative/reductive reactions, it performs the third operation (full line) wherein a lower temperature of circulation water is supplied through the circulation passage 66, thus leading to a decrease in the temperature of the stack 40.

The end plates 48 are provided at the outermost right and left edges of the stack 40. Each of the end plates 48 is provided with a channel (not shown), through which the fuel gas flows in (or out) the stack 40. In addition, the end plate 48 is coupled with fix screws (not shown) to bond the unit cells (not shown) to each other. The end plate 48 is made of a highly hard metal e.g. duraluminum so that it can support a total weight of the stack 40 and maintain the shape thereof.

The circulation water reservoir 50 supplies the circulation water through the circulation passage 66 to the cooling plate 46 of the stack 40. In the initial operation step, i.e., the first operation (dotted line) of the fuel cell 10, the water thermal-exchanged and heated in the heat exchanger 24 of the reforming apparatus 20 is supplied through the fourth passage 52 to the circulation water reservoir 50. The water supplied through the fourth passage 52 is heated by the heat exchanger 24 and thus warmed to increase the temperature of the circulation water contained in the circulation water reservoir 50. As the circulation water contained in the circulation water reservoir 50 increases in temperature, the circulation water supplied to the cooling plate 46 increases in temperature. Accordingly, in the first operation (dotted line) step, it is possible to elevate the temperature of the stack 40 rapidly to a level required for normal operation. The circulation water reservoir 50 includes the combustion reactor 60 to heat the circulation water in the circulation water reservoir 50.

The combustion reactor 60 is a constituent component of a preheating unit, which takes the shape of a pocket, encompassing the outside of the circulation water reservoir 50. The combustion reactor 60 includes the inlet 68 connected to the fifth passage 37 and the outlet 69 connected to the third passage 64. When the temperature of the shift reactor 26 reaches 100°C, the fuel cell 10 begins to perform the second operation (dashed-dotted line). In the second operation (dashed-dotted line) step, the fuel gas mixed in the mixer 30 is supplied through the second passage 34 to the heating burner 22 and the combustion reactor 60. The hydrogen contained in the fuel gas, supplied to the combustion reactor 60 through the fifth passage 37 branched from the second passage 34, is reacted with a catalyst (represented by the reference numeral "62" in FIG. 3b) inside the combustion reactor 60. The hydrogen is reacted with the catalyst (the reference numeral "62" in FIG. 3b) to generate heat. The generated heat causes heating of the circulation water contained in the circulation water reservoir 50 directly in contact with the combustion reactor 60. Since the circulation water stored in the circulation water reservoir 50 is supplied to the cooling plate 46 of the stack 40, it can rapidly increase the temperature of the stack 40 to a level required for the normal operation of the fuel cell 10. Through the third passage 64, the fuel gas discharged from the combustion reactor 60 circulates from the fuel electrode 42 to the air electrode 44 and at the same time, is heat-exchanged. The fuel gas is completely combusted in the combustion reactor 60 and carbon monoxide contained therein is thus removed. Although such a fuel gas is supplied to the inside of the stack 40, it does not cause damage to the stack 40. In addition, the fuel gas discharged from the combustion reactor 60 serves to wash the fuel electrode 42 and the air electrode 44 while circulating in the electrodes 42 and 44, thus eliminating the necessity of washing the electrodes with a nitrogen gas. Hereinafter, referring to FIGS. 3a and 3b, the combustion reactor 60 of the fuel cell 10 according to the first exemplary embodiment of the present invention will be illustrated in detail.

FIG. 3a is a perspective view illustrating the combustion reactor in FIG. 2. FIG. 3b is a cross-sectional view illustrating the combustion reactor in FIG. 2.

As shown in FIGS. 3a and 3b, the first exemplary embodiment of the present invention, the combustion reactor 60 accepts a catalyst 62 therein.

The combustion reactor 60 encompasses the outside of the circulation water reservoir 50 in the form of a pocket. The combustion reactor 60 includes an inlet 68 and an outlet 69. The inlet 68 and the outlet 69 are diagonally spaced apart from each other at a farthest position in the combustion reactor 60. The arrangement of the inlet 68 and the outlet 69 in the combustion reactor 60 cause an increase in length of a passage, allowing the fuel gas to pass through the combustion reactor 60. As the passage, through which the fuel gas flows, is lengthened, the time the fuel gas stays in the combustion reactor 60 is prolonged and the reaction of the gas and the catalyst 62 thus slows down. As a result, exothermic reaction is promoted. The catalyst 62 is arranged in the combustion reactor 60.

The catalyst 62 is arranged in the catalyst acceptor 63 arranged between the inlet 68 and the outlet 69 of the combustion reactor 60. The arrangement of the catalyst 62 aims to maximize the chances the catalyst is in contact with the fuel gas passing through the combustion reactor 60. The catalyst 62 is a substance that is reacted with a hydrogen gas to generate heat and the substance is one selected from a metal e.g., platinum (Pt), palladium (Pd), ruthenium (Ru) or gold (Ag), or an oxide thereof. Specifically, the catalyst 62 may be a metal, e.g., platinum (Pt), palladium (Pd), ruthenium (Ru) or gold (Ag), or metal oxide prepared by dissolving one or more of the metals in aluminum oxide (Al₂0₃) as a carrier. When the catalyst 62 is composed of metal oxide, it has a large surface area and thus an increased area where the catalyst is in contact with the fuel gas. The catalyst 62 is intensely arranged in a part of the combustion reactor 60 in contact with the circulation water reservoir 50. Accordingly, the circulation water contained in the circulation water reservoir 50 is heated by reaction heat of the catalyst 62. Since the heated circulation water is supplied to the cooling plate (represented by the reference numeral "46" in FIG. 2) as mentioned above, the stack (represented by the reference numeral "40" in FIG. 2) is rapidly heated to a temperature required for normal operation.

As constituted above, a method for controlling the fuel cell according to the first exemplary embodiment of the present invention will be illustrated with reference to FIGS. 2, 3a, 3b and 4 below.

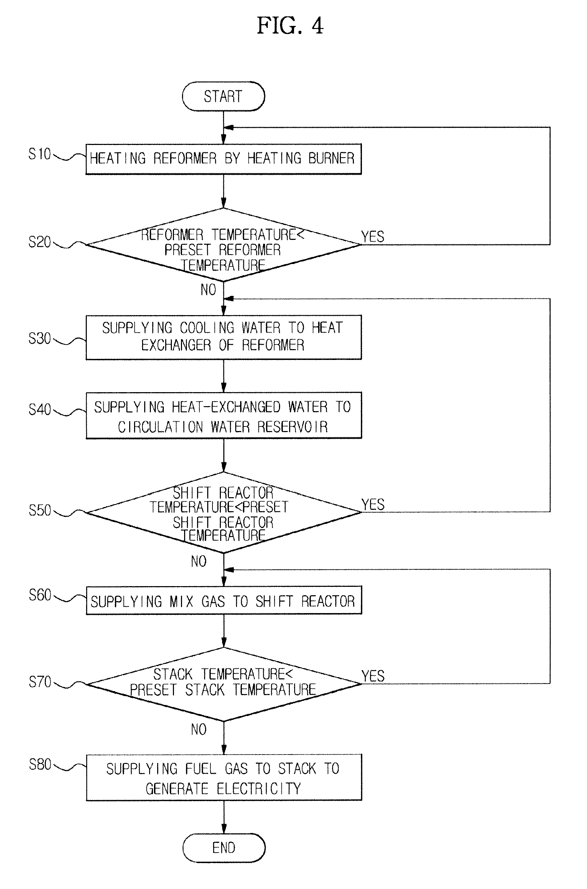

FIG. 4 is a flow chart illustrating a method for controlling the fuel cell according to the first exemplary embodiment of the present invention.

When the fuel cell 10 initially operates, its constituent components are not within the normal temperature range, enabling generation of electricity through chemical reactions. Accordingly, in order to heat respective constituent components of the fuel cell 10 to a desired temperature, the heating burner 22 directly heats the reformer 23. (S10)

Based on the operation of the heating burner 22, when the temperature of the reformer 23 reaches its set value (i.e., 500°C) (S20) and water is supplied to the heat exchanger 24 of the reformer 23 to maintain the temperature of the reformer 23 within a desired level (S30).

After water is supplied to the heat exchanger 24 of the reformer 23 before the temperature of the shift reactor 26 reaches 100°C, heated and thermally-exchanged water is supplied to the circulation water reservoir 50 via the fourth passage 52 (S40). Then, while circulating the cooling plate 46 via the circulation passage 66, the heated water primarily increases the temperature of the stack 40. That is, the fuel cell 10 performs the first operation (dotted line).

When the temperature of the shift reactor 26 reaches the preset shift reactor temperature, i.e., 100°C (S50), the fuel gas produced from the mixer 30 is supplied to the combustion reactor 60 (S60). Although the temperature of the shift reactor 26 reaches 100°C, the temperature of the stack 40 does not reach a level required for generation of electricity via oxidative and reductive reactions. Accordingly, until the stack 40 reaches the preset stack temperature, a high temperature of fuel gas generated from the mixer 30 is supplied to the combustion reactor 60. The fuel gas supplied to the combustion reactor 60 is reacted with the catalyst 62 to generate heat, and thus heats the circulation water contained in the circulation water reservoir 50. While circulating the cooling plate 46 via the circulation passage 66, the resulting circulation water rapidly elevates the temperature of the stack 40. In addition, the fuel gas, discharged from the combustion reactor 60, passes through the fuel electrode 42 and the air electrode 44 via the third passage 64, thus thoroughly heating the stack 40. That is, the fuel cell 10 performs the second operation (dashed-dotted line).

When the stack 40 has a temperature higher than the preset stack temperature (S70), it receives the fuel gas generated from the reforming apparatus 20 to generate electric and thermal energies and the fuel cell 10 performs the third operation (full line). High temperature-type stacks and low temperature-type stacks have a preset stack temperature of about 120°C and about 80°C, respectively.

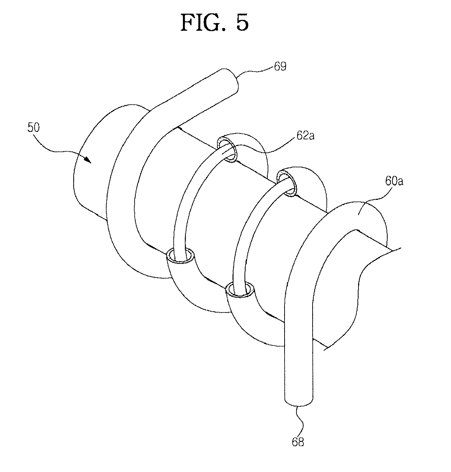

FIG. 5 is a partial cross-sectional view illustrating the combustion reactor according to a second exemplary embodiment of the present invention. The description for the difference between the second exemplary embodiment and the first exemplary embodiment is only given. If necessary, for the purpose of clearer illustration, the same elements as in the first exemplary embodiment are denoted by the same reference numerals, and the alternated elements are denoted by like reference numerals with the addition of "a".

According to the second exemplary embodiment, a combustion reactor 60a has the shape of a tube wound along the external surface of the circulation water reservoir 50. That is, the tubular combustion reactor 60a is coiled around the cylindrical circulation water reservoir 50. A catalyst 62a is provided along the shape of tubular combustion reactor 60a in the combustion reactor 60a.

Unlike the first exemplary embodiment, the catalyst 62a of the second exemplary embodiment is provided inside the combustion reactor 60a in a longitudinal direction of the combustion reactor 60a. Accordingly, the fuel gas introduced through an inlet 68 moves from the combustion reactor 60a to an outlet 69 through the space between the catalyst 62a provided therein and the internal walls of the combustion reactor 60a, while continually reacting with the catalyst 62a to generate heat. When the heat generated by the reaction of the catalyst 62a with the fuel gas is transferred to circulation water contained in the circulation water reservoir 50, the circulation water circulates, thus leading to elevation in the temperature of the stack (40 of FIG. 2).

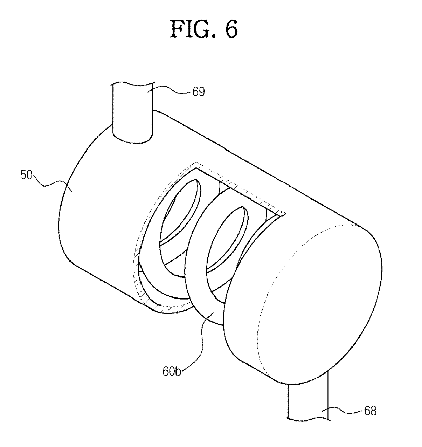

FIG. 6 is a partial cross-sectional view illustrating the combustion reactor according to a third exemplary embodiment of the present invention. The description for the difference between the third exemplary embodiment and the first exemplary embodiment is only given. If necessary, for the purpose of clearer illustration, the same elements as in the first exemplary embodiment are denoted by the same reference numerals, and the alternated elements are denoted by like reference numerals with the addition of "b".

According to the third exemplary embodiment of the present invention, a combustion reactor 60b has the shape of a tube provided inside the circulation water reservoir 50. That is to say, the combustion reactor 60b passes through the inside of the circulation water reservoir 50 and is coiled in the shape of a spring so as to make the length of the combustion reactor 60b accepted in a limited area as high as possible. Catalysts (not shown) are provided inside the combustion reactor 60b along the shape of the tubular combustion reactor 60b and are reacted with the fuel gas to generate heat.

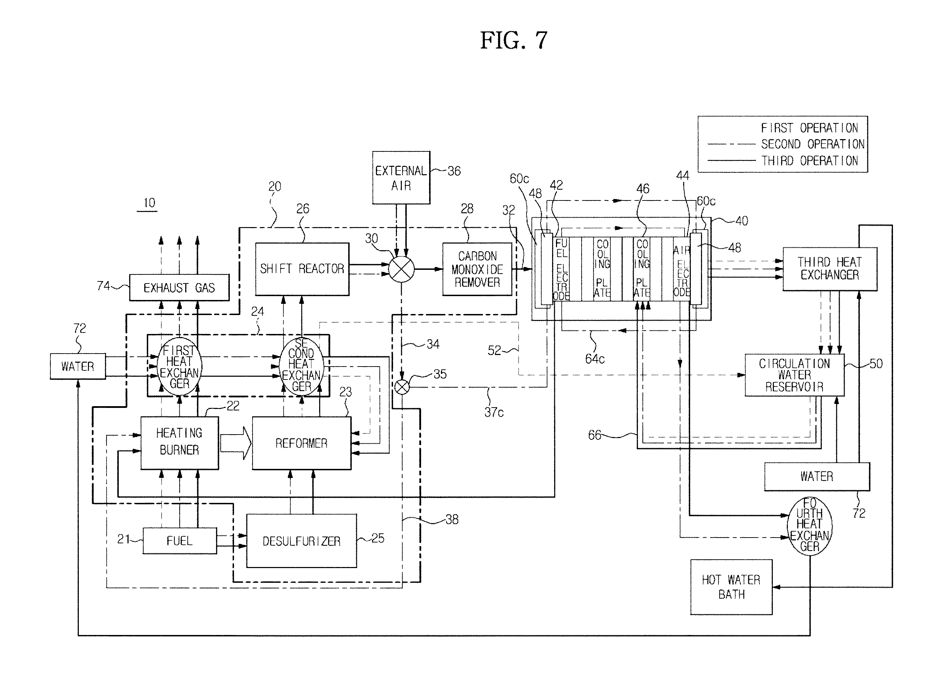

FIG. 7 is a partial cross-sectional view illustrating the combustion reactor according to a fourth exemplary embodiment of the present invention. The description for the difference between the fourth exemplary embodiment and the first exemplary embodiment is only given. If necessary, for the purpose of clearer illustration, the same elements as in the first exemplary embodiment are denoted by the same reference numerals, and the alternated elements are denoted by like reference numerals with the addition of "c".

According to the fourth exemplary embodiment of the present invention, a combustion reactor 60c has the shape of a pocket, encompassing the outside of the end plate 48 of the stack 40.

As mentioned above, the end plate 48 is made of a highly hard metal e.g. duraluminum so that it can support a total weight of the stack 40 and maintain the shape thereof. Accordingly, since the end plate 48 has a high heat capacity with respect to a total heat capacity of the stack 40, rapid elevation in temperature of the end plate 48 has an important role to increase the temperature of the stack 40 within a given time. The combustion reactor 60c of the fourth exemplary embodiment is arranged on the end plate 48 provided at the both sides of the stack 40.

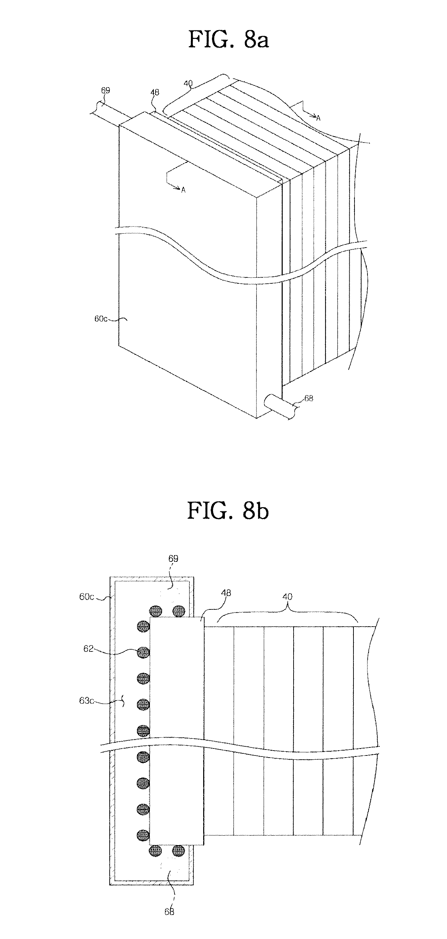

The combustion reactor 60c is provided on both the end plates 48. A fifth passage 37c branched from the second passage 34 is connected to the combustion reactor 60c provided on the one of the end plates 48. The fuel gas reacts with the catalyst to generate heat, while passing from the one combustion reactor 60c to the other combustion reactor 60c. After sequentially calculating the one and the other combustion reactors 60c, the fuel gas passes through the fuel electrode 42 and the air electrode 44 along a third passage 64c, thus leading to heat exchange and elevation in the temperature of the stack 40. Hereinafter, the structure of the combustion reactor 60c according to the fourth exemplary embodiment will be described with reference to FIGS. 8a and 8b in detail.

FIG. 8a is a perspective view of the combustion reactor. FIG. 8b is a sectional view taken along the lines "A-A" of FIG. 7.

As shown in FIGs. 8a and 8b, the combustion reactor 60c according to the fourth exemplary embodiment has the shape of a pocket, encompassing the outside of the end plate 48 of the stack 40.

The combustion reactor 60c includes an inlet 68 through which a fuel gas is fed, and an outlet through which the fuel gas is discharged. A catalyst 62 is provided in a region where the catalyst acceptor 63c is adjacent to the end plate 48 between the inlet 68 and the outlet 69. The fuel gas reacts with the catalyst 62 to directly heat the end plate 48.

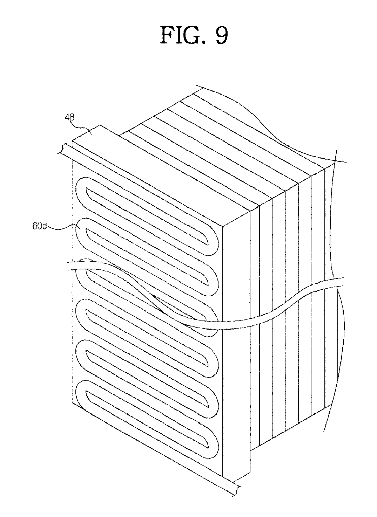

FIG. 9 is a partial cross-sectional view illustrating the combustion reactor according to a fifth exemplary embodiment of the present invention. The description for the difference between the fifth exemplary embodiment and the first exemplary embodiment is only given. If necessary, for the purpose of clearer illustration, the same elements as in the first exemplary embodiment are denoted by the same reference numerals, and the alternated elements are denoted by like reference numerals with the addition of "d".

According to the fifth exemplary embodiment of the present invention, a combustion reactor 60d takes a tube wound along the external surface of the end plate 48. That is, the combustion reactor 60d is arranged in a zigzag pattern at the one side of the end plate 48 in the shape of a plate. Catalysts (not shown) are provided inside the combustion reactor 60b along the shape of the tubular combustion reactor 60d inside the combustion reactor 60d and are reacted with the fuel gas to generate heat.

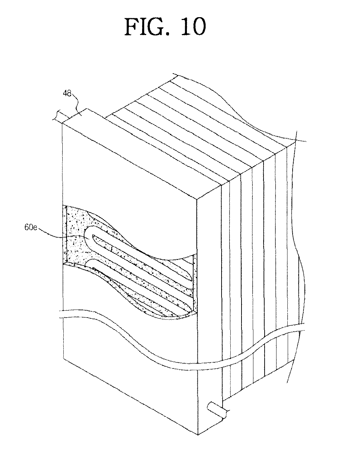

FIG. 10 is a partial cross-sectional view illustrating the combustion reactor according to a sixth exemplary embodiment of the present invention. The description for the difference between the sixth exemplary embodiment and the first exemplary embodiment is only given. If necessary, for the purpose of clearer illustration, the same elements as in the first exemplary embodiment are denoted by the same reference numerals, and the alternated elements are denoted by like reference numerals with the addition of "e".

The combustion reactor 60e of the sixth exemplary embodiment has the shape of a tube provided inside the end plate 48. That is to say, the combustion reactor 60e passes through the inside of the end plate 48 in the shape of the plate and is arranged in a zigzag pattern so as to make the length of the combustion reactor 60e accepted in a limited area as high as possible. Catalysts (not shown) are provided inside the combustion reactor 60e along the shape of the tubular combustion reactor 60e and are reacted with the fuel gas to generate heat.

The foregoing exemplary embodiments have been illustrated with reference to the case where the third passage extends from the fuel electrode to the air electrode. Alternatively, the third passage may extend from the air electrode to the fuel electrode.

In addition, the foregoing exemplary embodiments have been illustrated with reference to the case where the combustion reactor is provided in either the circulation water reservoir or the end plate. Alternatively, the combustion reactor may be provided in both the circulation water reservoir and the end plate.

In addition, the foregoing exemplary embodiments have been illustrated with reference to the case where the combustion reactor has the shape of a pocket or tube. The shape of the combustion reactor is not limited thereto. Any shape is applicable so long as it enables efficient transfer of heat.

As apparent from the foregoing, the fuel cell and the method controlling for the fuel cell according to exemplary embodiments of the present invention enable elevation of an internal temperature in a rapid and economical manner until the fuel cell initially operates and thus enables normal operation.

In addition, according to the fuel cell and the control method thereof efficiently employ an exhaust gas discharged in the process of elevating the temperature of the fuel cell to a level required for the normal operation, thus improving economical efficiency.

Furthermore, according to the fuel cell and control method thereof, the fuel electrode and the air electrode are cleaned with the gas discharged from the shift reactor during heating and external air, thus eliminating the necessity of an additional cleaning process.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

## Claims

1. A fuel cell comprising:
a reforming apparatus to perform reformation reactions, which produces a fuel gas and a heat by-product;
a stack to receive the fuel gas from the reforming apparatus and to generate energy;
a preheating unit to heat the stack; and
an operation control unit to supply at least one of the fuel gas and heat by-product to the preheating unit during an initial operation of the reforming apparatus, and to supply the fuel gas to the stack upon the completion of the initial operation.

2. The fuel cell according to claim 1, wherein:
the reforming apparatus includes a heating burner, a reformer which is heated by the heating burner, a shift reactor which receives gas discharged by the reformer, a mixer to mix gas received from the shift reactor with external air, and a carbon monoxide remover which removes carbon monoxide from mixture of gas and external air to provide the fuel gas,
wherein the stack includes: a plurality of cells wherein each cell has a fuel electrode to receive the fuel gas through a first passage extended from the carbon monoxide remover and an air electrode in which the fuel electrode and air electrode are positioned at opposite sides of an electrolyte film; a plurality of cooling plates to receive circulation water from a circulation water reservoir, wherein each cooling plate is interposed between adjacent cells; and end plates provided at an outermost edge of the stack, and wherein the stack generates energy comprising electricity.

3. The fuel cell according to claim 2, wherein:
the operation control unit includes a controller to control the mixer and thereby to determine a supply passage of the fuel gas, and
the preheating unit is at least one of a circulation water reservoir and a combustion reactor used to heat the stack during the initial operation.

4. The fuel cell according to claim 3, wherein the combustion reactor includes a catalyst acceptor containing a catalyst to react with the fuel gas to generate heat and the combustion reactor communicates with a second passage extended from the mixer.

5. The fuel cell according to claim 4, wherein the combustion reactor takes the shape of a pocket, encompassing the outside of at least one of the circulation water reservoir or at least one end plate.

6. The fuel cell according to claim 4, wherein the combustion reactor takes the shape of a tube wound along the external surface of at least one of the circulation water reservoir or at least one end plate.

7. The fuel cell according to claim 4, wherein the combustion reactor takes the shape of a tube arranged in the inside of at least one of the circulation water reservoir or at least one end plate.

8. The fuel cell according to claim 4, wherein the combustion reactor further comprises a third passage through which the fuel gas passed through the combustion reactor passes through one of the fuel electrode and the air electrode, while being heat-exchanged.

9. The fuel cell according to claim 8, further comprising a heat exchanger, wherein the heat by-product is warm water passed through the heat exchanger, wherein the water is warmed by at least one of gas discharged by the heating burner and gas discharged from the reformer, and wherein the circulation water reservoir is provided with a fourth passage through which the warm water is supplied.

10. The fuel cell according to claim 4, wherein the second passage includes a fifth passage branched toward the combustion reactor from a control valve arranged on the second passage, and a sixth passage branched toward the heating burner from the control valve.

11. The fuel cell according to claim 4, wherein the catalyst is one of platinum (Pt), palladium (Pd), ruthenium (Ru), gold (Ag) and oxide thereof.

12. The fuel cell according to claim 2, wherein the initial operation includes a first operation in which the temperature of the shift reactor is lower than 100°C and a second operation in which the temperature of the stack is lower than 120°C.

13. The fuel cell according to claim 12, wherein:
during the first operation, warm water, as the heat by-product generated at the
reforming apparatus, is supplied to the preheating unit, and
during the second operation, the gas generated at the reforming apparatus is supplied to the preheating unit.

14. The fuel cell according to claim 13, wherein during the first operation, the warm water as the thermal by-product is supplied to the preheating unit, when the temperature of the reformer is higher than 500°C.

15. The fuel cell according to claim 3, wherein the external air has a composition in which a ratio X (v/v) of oxygen to the sum of hydrogen and carbon monoxide is in the range of 0.1 < X < 2.

16. A method for controlling a fuel cell including a reforming apparatus and a stack, the method comprising:
heating a shift reactor of the reforming apparatus to a preset shift reactor temperature using gas discharged from a reformer of the reforming apparatus;
preheating fuel gas obtained by mixing external air with gas generated at the shift reactor of the reforming apparatus, when stack temperature is lower than a preset stack temperature; and
performing normal operation to supply the fuel gas to the stack, when the stack temperature reaches the preset stack temperature.
